# EUROPÄISCHE PATENTANMELDUNG

(11) **EP 0 609 889 A1**
(43) Veröffentlichungstag der Anmeldung: **10.08.1994**
(21) Anmeldenummer: 94101693.3
(22) Anmeldetag: 04.02.1994
(51) Int. Cl.: B60N 2/28

(54) **Kindersicherheitssitz für Fahrzeuge**

(30) Priorität: 04.02.1993 DE 4303244
(71) Anmelder: OSANN DESIGN ENTWICKLUNGS- UND PRODUKTIONS-GmbH, KINDERSICHERHEITSSYTEME, D-78244 Gottmadingen (DE)
(72) Erfinder: Wurster, Fritz W., D-73550 Waldstetten (DE); Osann, Stephan, D-78244 Gottmadingen (DE)
(74) Vertreter: Hilleringmann, Jochen, Dipl.-Ing.

(57) **Zusammenfassung**

Der Kindersicherheitssitz (10) besteht aus einem Sockel (14) und einer Sitzschale (12). Beide sind derart miteinander verbunden, daß sich die Sitzschale (12) relativ zum Sockel (14) verschieben bzw. verschwenken läßt und in der jeweiligen Verschwenkposition festlegen läßt. An der dem Socke (14) zugewandten Unterseite der Sitzschale (12) sind zwei integral mit der Sitzschale (12) verbundene Führungsvorsprünge (18) zum Führen der Sitzschale (12) an dem Sockel (14) ausgebildet. Bei zusammengebautem Kindersicherheitssitz (10) sind diese beiden Führungsvorsprünge (18) in korrespondierende Führungsnuten (32) zur Aufnahme der Führungsvorsprünge (18) eingetaucht. Die Sitzschale (12) ist unmittelbar an dem Sockel (14) gehalten, und zwar derart, daß die Führungsvorsprünge (18) sich in den Führungsnuten (32) bewegen und von diesen aufgenommen bleiben, wenn die Position der Sitzschale (12) relativ zum Sockel (14) verändert wird.

## Beschreibung

Die Erfindung betrifft einen Kindersicherheitssitz mit einem Sockel und einer Sitzschale, die relativ zum Sockel verschiebbar bzw. verstellbar sowie festlegbar ist.

Kindersicherheitssitze der zuvor genannten Art zum Befestigen an einem Kfz-3-Punkt-Sicherheitsgurt sind in den unterschiedlichsten Ausgestaltungen bekannt. Damit das Kind, Kleinkind bzw. Baby während der Autofahrt schlafen kann, kann die Sitzschale relativ zum Sockel des Kindersicherheitssitzes verschoben bzw. verschwenkt und in eine Liegestellung gebracht werden. Zumeist ist es möglich, Sockel und Sitzschale in eine Vielzahl von relativen Verschwenkpositionen relativ zueinander festzulegen. Zu diesem Zweck weisen die Kindersicherheitssitze zumeist Verstellmechanismen auf, die zwischen der dem Sockel zugewandten Unterseite der Sitzschale und der der Sitzschale zugewandten Oberseite des Sockels angeordnet und an Sockel und Sitzschale befestigt sind. Während der Sockel und die Sitzschale normalerweise aus Kunststoff bestehen, sind die Verstellmechanismen aus einzelnen Metallteilen zusammengesetzt. Die Verwendung von Kunststoff und Metall bringt Probleme, was die Recyclebarkeit des Kindersicherheitssitzes betrifft. Ferner verkompliziert sich der Zusammenbau des Kindersicherheitssitzes, da die Teile des Verstellmechanismus in irgendeiner Form, beispielsweise durch Verschrauben mit dem Sockel und der Sitzschale verbunden werden müssen.

Der Erfindung liegt die Aufgabe zugrunde, einen Kindersicherheitssitz zu schaffen, für dessen Verstellmechanismus so wenig zusätzliche Teile wie möglich erforderlich sind, insbesondere keine aus einem anderen Material als demjenigen für den Sockel und die Sitzschale bestehenden Teile verwendet werden müssen und dessen Zusammenbau recht einfach ist.

Zur Lösung dieser Aufgabe wird bei einem Kindersicherheitssitz der eingangs genannten Art mit der Erfindung vorgeschlagen, daß die Sitzschale oder der Sockel mindestens einen angeformten Führungsvorsprung zum Führen der Sitzschale an dem Sockel aufweist, daß mindestens eine direkt an dem Sockel oder der Sitzschale ausgebildete Führungsnut zur Aufnahme des Führungsvorsprungs vorgesehen ist, wobei der Führungsvorsprung bei sich relativ zum Sockel verschiebender Sitzschale in der Führungsnut geführt ist, und daß die Sitzschale unmittelbar an dem Sockel gehalten ist.

Nach der Erfindung ist der Verstellmechanismus integraler Bestandteil von Sockel und Sitzschale. An der Unterseite der Sitzschale (oder alternativ an der Oberseite des Sockels) ist mindestens ein Führungsvorsprung zum Führen der Sitzschale an dem Sockel einstückig angeformt. Dieser Führungsvorsprung ist bei zusammengesetztem Kindersicherheitssitz in eine Führungsnut eingetaucht, die an der Oberseite des Sockels (oder alternativ an der Unterseite der Sitzschale) als integraler Bestandteile desselben bzw. derselben ausgebildet ist. In ihrem Querschnitt sind der Führungsvorsprung und die Führungsnut einander korrespondierend ausgebildet. Die Sitzschale und der Sockel sind bei diesem Verstellmechanismus unmittelbar miteinander zusammengehalten. Sind ein einziger Führungsvorsprung und eine einzige Führungsnut vorgesehen, so sollten diese vorteilhafterweise in der Mitte von Sockel und Sitzschale ausgebildet sein, so daß der Kindersicherheitssitz bezüglich des Führungsvorsprungs und der Führungsnut symmetrisch ausgebildet ist, was seine beiden Seitenhälften betrifft.

Da nach der Erfindung der Verstellmechanismus integraler Bestandteil von Sockel und Sitzschale ist, besteht er aus demselben Material wie diese beiden Teile des Kindersicherheitssitzes, also vorzugsweise Kunststoff. Bis auf ein Element zum Verbinden von Sitzschale und Sockel sind für den Verstellmechanismus keine zusätzlichen separaten Teile erforderlich. Damit ist der erfindungsgemäße Kindersicherheitssitz sowohl bezüglich seiner Recyclefähigkeit als auch seiner Montage vorteilhaft.

In vorteilhafter Weiterbildung der Erfindung sind zwei Führungsvorsprünge und zwei Führungsnuten vorgesehen, die jeweils voneinander beabstandet sind, und zwar in einer quer zur Verschiebungsrichtung verlaufenden Richtung. Vorzugsweise ist jeder Führungsvorsprung und jede Führungsnut bogenförmig ausgebildet. Beide erstrecken sich in Verschieberichtung der Sitzschale relativ zum Sockel. Der bzw. die Führungsvorsprünge weisen damit eine kufenartige Form auf, wobei der Querschnitt vorzugsweise viereckig ist.

Zur Verlängerung des Verschiebungsbereichs weist die mindestens eine Führungsnut in Verschiebungsrichtung liegende offene Enden auf. Bei einem sich in Verschiebungsrichtung erstreckenden Führungsvorsprung kann dieser auch teilweise über das offene Ende der korrespondierenden Führungsnut vorstehen, ohne daß die Führung von Sockel und Sitzschale beeinträchtigt ist.

Die Verbindung von Sitzschale und Sockel erfolgt vorzugsweise durch ein Verankerungselement, das mit dem Sockel (oder alternativ der Sitzschale) verbunden ist und in eine sich in Verschiebungsrichtung erstreckende längliche Aussparung in der Sitzschale (oder alternativ dem Sockel) hineinragt und den Aussparungsrand hintergreift. Damit sind Sitzschale und Sockel unverlierbar aneinander gehalten. Vorzugsweise besteht auch dieses Verankerungselement aus Kunststoff und ist insbesondere als Kunststoff-Clip ausgebildet.

Bei dem Verankerungselement handelt es sich vorzugsweise um einen Hülsenkörper mit an seinen beiden axialen Enden angeordneten Ringflanschen zum Hintergreifen des Randes der länglichen Aussparung und des Randes eines in der Sitzschale oder dem Sockel (je nachdem, welches Teil nicht mit der länglichen Aussparung versehen ist) vorgesehenen Loches.

Vorzugsweise ist der Hülsenkörper an einem seiner beiden axialen Enden mit zu diesem Ende hin offenen Schlitzen versehen, wobei der zugehörige Ringflansch eine außenliegende Schrägfläche aufweist. Beim Zusammenbau des Kindersicherheitssitzes wird die Sitzschale auf den Sockel aufgesetzt. Das Aufnahmeloch für den Hülsenkörper und die Aussparung, durch die sich der Hülsenkörper hindurch erstreckt, wenn er in das Aufnahmeloch hineingedrückt ist, liegen sich dabei gegenüber und fluchten miteinander. Aufgrund der Ausbildung von axial verlaufenden zu einem der beiden axialen Enden hin offenen Schlitzen verringert sich dieses axiale Ende in seinem Durchmesser, wenn die außenliegende Schrägfläche des zugehörigen Ringflansches beim Eindrücken des Hülsenkörpers in die Aussparung und das Aufnahmeloch an deren Ränder zur Anlage kommt. Anschließend weitet sich das axiale Ende wieder auf, so daß der Ringflansch mit seiner radial abstehenden Unterseite den Aufnahmelochrand hintergreift. Der zweite Rinflansch hintergreift mit seiner dem anderen Ringflansch zugewandten Seite die einander gegenüberliegenden Randabschnitte der länglichen Aussparung, womit eine feste Verbindung zwischen Sockel und Sitzschale erreicht ist. Beim Verschwenken der Sitzschale relativ zum Sockel bewegt sich also der Hülsenkörper in der länglichen Aussparung.

Vorzugsweise ist der Hülsenkörper doppelwandig ausgebildet und weist einen Außenhülsenkörper mit offenen Enden und einen Innenhülsenkörper auf, der paßgenau in den Außenhülsenkörper einführbar ist. Der Außendurchmesser des Innenhülsenkörpers ist also gleich oder im wesentlichen gleich dem Innendurchmesser des Außenhülsenkörpers. Vorzugsweise ist der Außenhülsenkörper mit den zu einem seiner beiden axialen Enden hin offenen Schlitzen und den Ringflanschen versehen. Der Innenhülsenkörper weist derartige Schlitze nicht auf und kann an einem seiner beiden axialen Enden geschlossen sein. Ebenfalls ist denkbar, daß es sich bei dem Innenhülsenkörper um einen massiven zylindrischen Körper handelt. Nachdem der Außenhülsenkörper in der oben für den Hülsenkörper beschriebenen Weise durch die längliche Aussparung und das Aufnahmeloch hindurch gedrückt worden ist, wird der Innenhülsenkörper bzw. der massive zylindrische Innenkörper in den Außenhülsenkörper hineingesteckt. Neben der Tatsache, daß das auf diese Weise gebildete Verbindungselement bezüglich seiner Stabilität verbessert ist, kommt dem von dem Außenhülsenkörper aufgenommenen Innenkörper darüber hinaus die Funktion zu, das mit den Schlitzen versehene Ende des Außenhülsenkörpers zu stabilisieren, so daß ein unbeabsichtigtes Herausnehmen des Außenhülsenkörpers aus dem Aufnahmeloch und der länglichen Aussparung unterbunden wird, da sich das mit den Schlitzen versehene Ende nicht bis auf den Durchmesser des Aufnahmelochs bzw. der länglichen Aussparung verjüngen kann.

Produktions- und fertigungstechnisch ist es vorteilhaft, wenn der zweiteilige Hülsenkörper als einteiliges Element hergestellt und zu Beginn der Montage als einteiliges Element handhabbar ist. Hierzu ist es vorteilhaft, daß die beiden Hülsenkörper in axialer Richtung nebeneinanderliegend angeordnet und an ihren einander zugewandten axialen Enden verbunden sind und daß diese Verbindung beim Ineinanderschieben der Hülsenkörper reißt. Der Innenhülsenkörper darf beim Einstecken des Außenhülsenkörpers noch nicht in diesen eingeführt sein. Nach der zuvor beschriebenen Weiterbildung sind die beiden Hülsenkörper derart angeordnet, daß ihre einander zugewandten Enden miteinander fluchten. Der zum Außenhülsenkörper paßgenau ausgebildete Innenhülsenkörper ist an seinem axialen Ende mit dem Außenhülsenkörper über einen dünnen Film aus dem Material von Außen- und Innenhülsenkörper, also aus Kunststoff, verbunden. Sobald der Außenhülsenkörper in die längliche Aussparung und das Aufnahmeloch hineingedrückt ist, was beispielsweise durch Ausübung von Druck auf den dem Innenhülsenkörper zugewandten Ringflansch des Außenhülsenkörpers erfolgt, der an dem dem geschlitzten Ende gegenüberliegenden Ende des Außenhülsenkörpers angeordnet ist, wird der Innenhülsenkörper durch Druckausübung in axialer Richtung in den Außenhülsenkörper hineingedrückt, wobei die dünne Verbindung zwischen beiden reißt. Diese Vorgehensweise ist sowohl fertigungstechnisch vorteilhaft, da für beide Teile nur eine Werkzeugform erforderlich ist, als auch montagefreundlich, da die beiden ineinanderzuschiebenden Teile bereits zu Beginn der Montage in der zum Zusammenführen erforderlichen Position zueinander stehen.

Wie bereits oben ausgeführt, lassen sich Sockel und Sitzschale in den einzelnen Verstellpositionen relativ zueinander festlegen. Dazu dient im allgemeinen eine Verriegelungsvorrichtung, die Verriegelungsvertiefungen, mindestens ein Verriegelungsteil zum Eintauchen in einer der Verriegelungsvertiefungen und ein Betätigungselement zum Bewegen des mindestens einen Verriegelungsteils aus einer Verriegelungsvertiefung heraus aufweist. Das mindestens eine Verriegelungsteil steht in einer Verriegelungsposition in Eingriff mit einer Verriegelungsvertiefung, ist etwa zumindest teilweise in diese Verriegelungsvertiefung eingetaucht, und steht in einer Freigabeposition außer Eingriff mit der Verriegelungsvertiefung, etwa indem es aus der Verriegelungsvertiefung herausbewegt ist. Mittels des Betätigungselements läßt sich also das mindestens eine Verriegelungsteil aus seiner Verriegelungsposition in seine Freigabeposition bewegen. Im allgemeinen erfolgt die Bewegung aus der Freigabeposition in die Verriegelungsposition selbsttätig, nämlich dann, wenn das Betätigungselement, das von Hand betätigt wird, losgelassen wird.

Bei dem erfindungsgemäßen Kindersicherheitssitz, insbesondere nach einer der zuvor beschriebenen Ausführungsformen, ist es vorteilhaft, daß die Verriegelungsvertiefungen unmittelbar an dem Sockel oder an der Sitzschale ausgebildet sind und das Verriegelungsteil unmittelbar an der Sitzschale oder dem Sockel angeordnet ist, und daß das Verriegelungsteil elastisch verformbar ist und sich bei Betätigung des Betätigungselements zum Bewegen des Verriegelungsteils in die Freigabeposition unter Erzeugung einer Rückstellkraft verformt, wobei sich das Verriegelungsteil beim Lösen des Betätigungselements aufgrund der Rückstellkraft selbständig in die Verriegelungsposition bewegt.

Gemäß dieser Variante der Erfindung sind die Verriegelungsvertiefungen, in die das Verriegelungsteil zum Feststellen der Sitzschale relativ zum Sockel zumindest teilweise eintaucht, integraler Bestandteil des Sockels (oder alternativ der Sitzschale). Lediglich bei dem Verriegelungsteil handelt es sich um ein von Sockel bzw. Sitzschale getrenntes Teil, das an dem Sockel und/oder der Sitzschale geführt ist und durch das mit ihm gekoppelte Betätigungselement aus der Verriegelungsposition in die Freigabeposition bewegbar ist. Durch diese Art der Ausbildung der Verriegelungsvorrichtung wird ebenfalls die Anzahl an neben Sockel und Sitzschale noch erforderlichen Teilen reduziert, wobei zumindest für die Verriegelungsvertiefungen keine zusätzlichen Teile, insbesondere keine zusätzlichen Teile aus Metall, erforderlich sind. Lediglich das Betätigungselement und das Verriegelungsteil müssen noch am Sockel bzw. an der Sitzschale angebracht werden, weshalb der Kindersicherheitssitz insgesamt als montagefreundlich bezeichnet werden kann.

Vorzugsweise besteht das Verriegelungsteil aus Kunststoff und ist derart ausgebildet, daß es durch elastische Verformung beim Bewegen in die Freigabeposition eine Rückstellkraft aufbaut, aufgrund derer es sich beim Loslassen des Betätigungselementes selbsttätig in die Verriegelungsposition zurückbewegt. Hierzu ist vorteilhafterweise vorgesehen, daß das Verriegelungsteil einen an der Sitzschale oder dem Sockel geführten Verriegelungsabschnitt und einen zum Verriegelungsabschnitt und der Führungsrichtung winklig verlaufenden Zugabschnitt aufweist, und daß der Zugabschnitt bei Betätigung des Betätigungselements zum Bewegen des Verriegelungsteils aus der Verriegelungsposition in die Freigabeposition Zugbeanspruchungen ausgesetzt ist und sich unter Erzeugung der Rückstellkraft verformt und dabei den Verriegelungsabschnitt in dessen Führung aus einer Verriegelungsvertiefung heraus bewegt und daß sich der Zugabschnitt beim Lösen des Betätigungselements infolge der Rückstellkraft zu seiner ursprünglichen Form zurückstellt und dabei den Verriegelungsabschnitt in dessen Führung in eine Verriegelungsvertiefung hinein bewegt.

Vorzugsweise sind zwei voneinander abweisend ausgerichtete Verriegelungsteile vorgesehen, die in einander gegenüberliegende Verriegelungsvertiefungen hinein und aus diesen heraus bewegbar sind, und zwar bei Betätigung des Betätigungselements. Dadurch, daß die Feststellung von Sitzschale und Sockel mittels zweier Verriegelungselemente erfolgt, ist die Arretierungswirkung erhöht.

Neben dem Verriegelungsteil besteht auch das Betätigungselement vorzugsweise aus Kunststoff. Dabei ist es herstellungstechnisch von Vorteil, wenn beide Teile mit einem Werkzeug hergestellt werden können. Darüber hinaus ist es von Vorteil, wenn das Betätigungselement mit dem Verriegelungsteil montagefreundlich zusammengesetzt werden kann. Vorzugsweise ist das Verriegelungsteil an einem Verbindungsteil angeformt, das seinerseits mit dem Betätigungselement gelenkig verbunden ist. Das Betätigungselement selbst ist schwenkbar an der Sitzschale (oder alternativ dem Sockel) gelagert und als Bügel ausgebildet. Das Betätigungselement und das Verbindungsteil sind nach der Produktion über ein dünnes Filmscharnier miteinander verbunden, wobei die Filmscharnierverbindung derart getroffen ist, daß das Verbindungsteil und das Betätigungselement unter Aufrechterhaltung der Filmscharnierverbindung miteinander mechanisch koppelbar sind. Vorzugsweise sind das Verbindungsteil und das Betätigungselement über eine Rastverbindung gelenkig miteinander verbindbar. Die Filmscharnierverbindung ist dabei derart ausgebildet, daß sich das Verbindungsteil und das Betätigungsteil lediglich in einer einzigen relativen Ausrichtung zueinander verbinden lassen; diese Art der Verbindung dieser beiden Teile ist die zum Anbringen von Betätigungselement und Verbindungsteil am Kindersitz erforderliche. Vorzugsweise weist das Betätigungselement (oder alternativ das Verbindungsteil) eine Durchbrechung auf, in die hinein ein Rastzapfen hineindrückbar ist, der an dem Verbindungsteil (oder alternativ dem Betätigungselement) angeformt ist. Der Rastzapfen ist dabei vorzugsweise als federelastische Rastkugel ausgebildet, so daß die Verbindung zwischen Betätigungselement und Verbindungsteil gelenkig ist.

Schließlich ist gemäß einer weiteren vorteilhaften Ausgestaltung der Erfindung vorgesehen, daß die Rastvertiefungen nach Art mindestens einer sich in Verstellrichtung der Sitzschale relativ zum Sockel erstreckenden einstückig an dem Sockel (oder alternativ der Sitzschale) angeformten Zahnstange ausgebildet sind.

Nachfolgend wird anhand der Figuren ein Ausführungsbeispiel der Erfindung näher erläutert. Im einzelnen zeigen:
- Fig. 1: eine perspektivische Ansicht eines Kindersicherheitssitzes in Explosionsdarstellung,
- Fig. 2: einen Mittel-Vertikalschnitt durch den Kindersicherheitssitz gemäß Fig. 1 im zusammengebauten Zustand,
- Fig. 3: einen Vertikalschnitt durch den Kindersicherheitssitz gemäß Fig. 1 im zusammengebauten Zustand, wobei die Schnittebene durch einen Führungsvorsprung und eine Führungsnut hindurch verläuft,
- Fig. 4: einen Schnitt entlang der Ebene IV-IV der Fig. 2,
- Fig. 5: eine Ansicht von unten auf die Sitzschale des Kindersicherheitssitzes bei abgenommenem Sockel,
- Fig. 6: eine Darstellung des Verriegelungsmechanismus zum Feststellen der Sitzschale relativ zum Sockel,
- Fig. 7: eine Draufsicht auf den Sockel des Kindersicherheitssitzes bei von diesem abgenommener Sitzschale, wobei die an der Sitzschale angeordneten Teile des Verriegelungsmechanismus angedeutet sind,
- Fig. 8: einen Schnitt entlang der Linie VIII-VIII der Fig. 7,
- Fig. 9: einen Schnitt entlang der Linie IX-IX der Fig. 7,
- Fig. 10: einen Halbschnitt durch eines der beiden Verankerungselemente zum Zusammenhalten von Sockel und Sitzschale, wobei das Verankerungsteil in seinem vormontierten Zustand dargestellt ist, und
- Fig. 11: das Verankerungsteil im montierten Zustand.

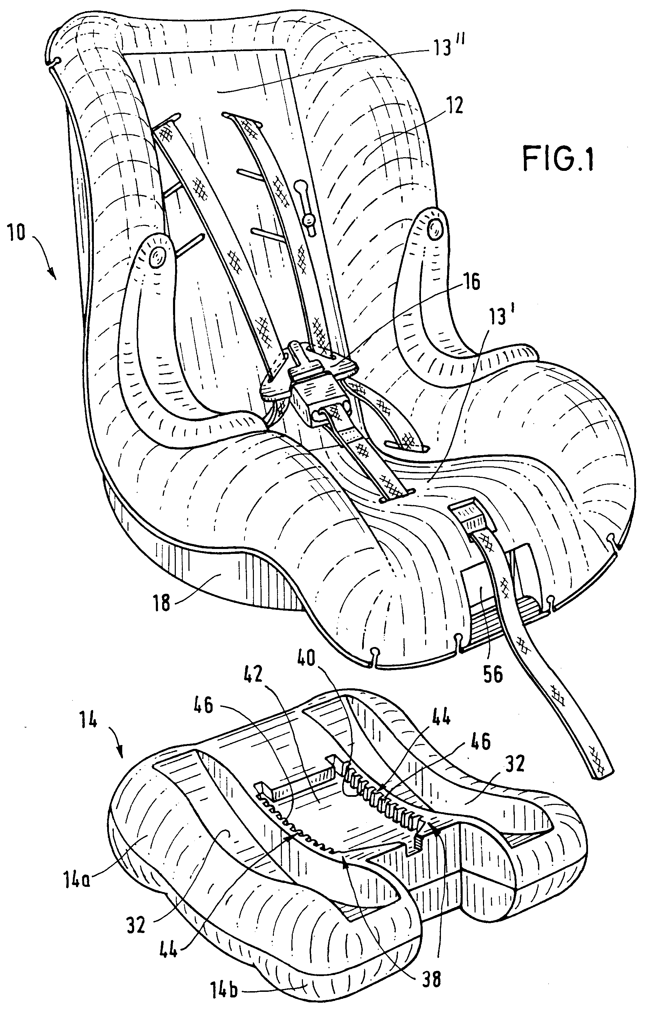

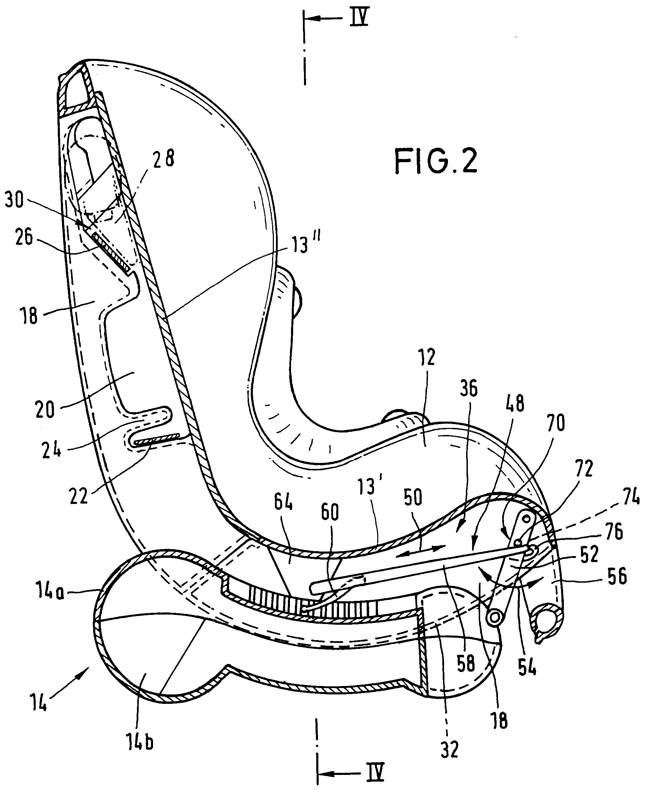

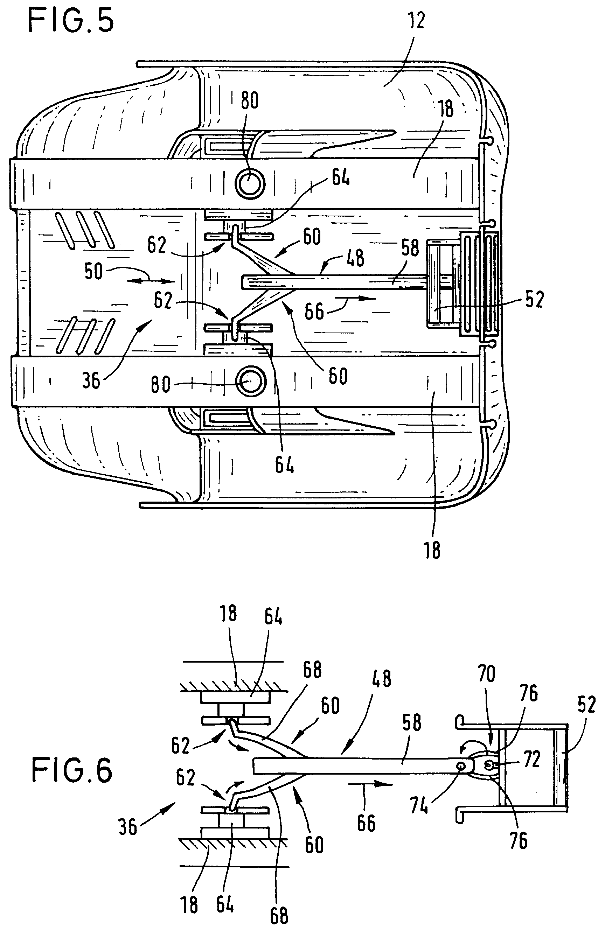

In Fig. 1 ist perspektivisch und in Explosionsdarstellung ein Kindersicherheitssitz 10 ohne Bezug dargestellt. Der Kindersicherheitssitz 10 besteht aus der Sitzschale 12 mit einer Sitzfläche 13' sowie einer Rückenlehne 13'' und dem Sockel 14. An der Sitzschale 12 ist ein 5-Punkt-Gurtsystem 16 zum Anschnallen eines Babys bzw. Kleinkindes vorgesehen. An der dem Sockel 14 zugewandten Unterseite der Sitzschale 14 sind zwei kufenartige und im Querschnitt viereckige Führungsvorsprünge 18 einstückig mit der Sitzschale 12 ausgebildet. Während in Fig. 1 lediglich einer der beiden Führungsvorsprünge 18 zu erkennen ist, sind in der Unteransicht der Sitzschale 12 gemäß Fig. 5 beide Führungsvorsprünge 18 zu erkennen. Die beiden Führungsvorsprünge 18 verlaufen parallel zueinander und sind voneinander beabstandet. Die Führungsvorsprünge 18 erstrecken sich an der Unterseite der Sitzschale 12 und sind außen an der Rückseite der Sitzschale 12 bis zu deren oberen Rand hochgezogen. In ihrem an dem Rückenteil der Sitzschale 12 verlaufenden Abschnitt weisen die beiden Führungsvorsprünge 18 miteinander fluchtende Durchbrechungen 20 auf, durch die hindurch sowohl der Beckenals auch der Schultergurt eines 3-Punkt-Gurtes eines Kraftfahrzeuges hindurch geführt werden. Wie in Fig. 2 gezeigt, verläuft der bei 22 angedeutete Beckengurt durch jede der Durchbrechungen 20 hindurch unterhalb eines Vorsprungs 24, der an dem betreffenden Führungsvorsprung 18 integral angeformt ist und in die Durchbrechungen 20 hineinragt, wobei er im Abstand vor der Rückenlehne 13'' endet. Der bei 26 angedeutete Schultergurt ist mit Hilfe einer Klemmvorrichtung 28 bei 30 klemmend an dem Führungsvorsprung 18 gehalten, und zwar in einer Vertiefung, die oberhalb des Vorsprungs 24 am den Führungsvorsprung 18 begrenzenden Innenrand der Durchbrechung 20 ausgebildet ist. Im zusammengebauten Zustand des Kindersicherheitssitzes 10 befinden sich die beiden Führungsvorsprünge 18 in vom Querschnitt her korrespondierenden Führungsnuten 32, die in der der Sitzschale 12 zugewandten Oberseite des Sockels 14 ausgeformt sind.

Die an der Unterseite der Sitzschale 12 und der Rückseite der Rückenlehne 13'' der Sitzschale 12 verlaufenden parallelen Führungsvorsprünge 18 sind nicht durchgehend einstückig ausgebildet; denn die Rückenlehne 13'' der Sitzschale 12 ist von einem Einsatzteil gebildet, das in eine von dem wulstförmigen Rand der Sitzschale 12 gebildeten Öffnung einrastend eingesetzt ist. An diesem Einsatzteil sind die entlang der Rückseite der Rückenlehne 13'' verlaufenden Abschnitte der Führungsvorsprünge 18 einstückig angeformt. Die zweiteilige Ausbildung der Führungsvorsprünge 18 sowie das Rückenlehnen-Einsatzteil sind in den Figuren angedeutet.

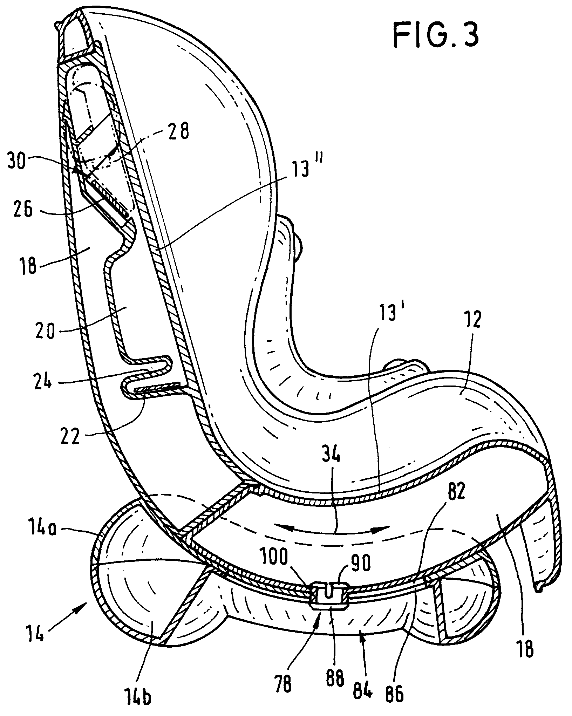

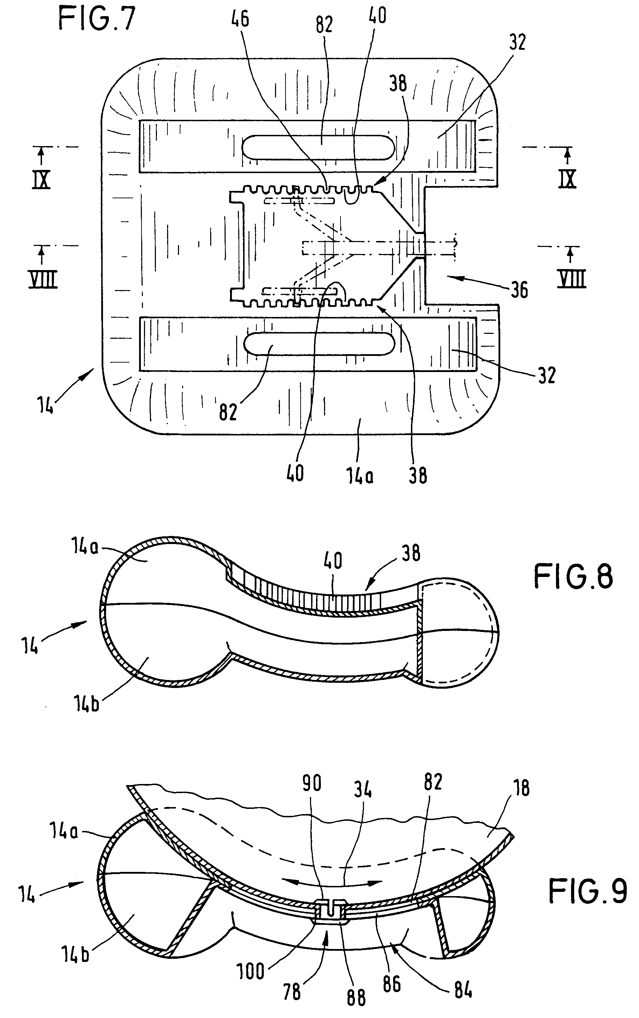

Wie in den Figuren, insbesondere in den Fign. 2, 3 und 9 dargestellt, verlaufen sowohl die Führungsvorsprünge 18 als auch die diese aufnehmenden Führungsnuten 32 bogenförmig, wobei der Krümmungsradius der Böden der Führungsnuten 32 gleich dem Krümmungsradius der diesen gegenüberliegenden Außenflächen der Führungsvorsprünge 18 ist. Bei einer Verschwenkung der Sitzschale 12 relativ zum Sockel 14 bewegen sich die Führungsvorsprünge 18 in den zugehörigen Führungsnuten 32. Die einstückig mit dem Sockel ausgebildeten Führungsnuten 32 sind ausreichend tief, so daß die Führungsvorsprünge 18 zu ihren beiden Seiten von ausreichend hohen Wandabschnitten der Führungsnuten 32 umgeben sind. Die Führungsnuten 32 und demzufolge auch die Führungsvorsprünge 18 weisen eine relativ große Breite auf und sind nahe den Außenseiten bzw. -kanten von Sockel 14 und Sitzschale 12 angeordnet, so daß einerseits eine große Stabilität und andererseits eine stabile Seitenführung der Sitzschale 12 am Sockel 14 gegeben ist. Der in den Fign. 3 und 9 bei 34 dargestellte Doppelpfeil gibt die beiden Richtungen 34 an, in denen die Sitzschale 12 relativ zum Sockel 14 verschwenkbar ist.

Um die Sitzschale 12 relativ zum Sockel 14 feststellen zu können, ist ein mit 36 bezeichneter Verriegelungsmechanismus vorgesehen, der zwischen der Sitzschale 12 und dem Sockel 14 wirkt. Zum Verriegelungsmechanismus gehören zwei Gruppen 38 von Verriegelungsvertiefungen 40, die integraler Bestandteil des Sockels 14 sind und an dessen der Sitzschale 12 zugewandten Oberseite ausgebildet sind. In der Oberseite des Sockels 14 befindet sich zwischen den beiden Führungsnuten 32 eine großflächige Vertiefung 42, in deren seitlichen Begrenzungswänden zu den Führungsnuten 32 hin die beiden Gruppen 38 von Vertiefungen 40 nach Art von Zahnstangen 44 ausgebildet sind. Die Zahnstangen 44 sind integraler Bestandteil des Sockels 14 und weisen die Verriegelungsvertiefungen 40 mit den dazwischenliegenden Vorsprüngen 46 auf. Während die Verriegelungsvertiefungen 40 einstückig am Sockel 14 ausgebildet sind, ist an der Unterseite der Sitzschale 12 zwischen den beiden Führungsvorsprüngen 18 ein Verriegelungsteil 48 angeordnet, das in Richtung des bei 50 in Fig. 5 eingezeichneten Doppelpfeils verschiebbar ist. Das Verriegelungsteil 48 ist, wie insbesondere anhand von Fig. 2 zu erkennen ist, mit einem Betätigungselement 52 verbunden, das seinerseits nach Art eines Bügels ausgebildet ist (s. Fign. 5 und 6) und drehbar an der Sitzschale gelagert ist, und zwar an dessen Vorderkante. Beim Verschwenken des bügelartigen Betätigungselements 52 in Richtung des in Fig. 2 bei 54 eingezeichneten Doppelpfeils bewegt sich das Verriegelungsteil 48 in einer der beiden mit dem Doppelpfeil 50 angedeuteten Richtungen. Das Betätigungselement 52 ist - bei Betrachtung der Sitzschale 12 von vorn - hinter dem vorderen nach unten gezogenen Rand der Sitzschale 12 angebracht. Zur Betätigung des Betätigungselements von Hand ist in diesem Randabschnitt der Sitzschale 12 eine Durchbrechung 56 ausgebildet, durch die hindurch das Betätigungselement 54 von Hand ergriffen und zum Schalenrand hin gezogen werden kann.

Das Verriegelungsteil 48 weist ein stabförmiges Verbindungsteil 58 auf, das gelenkig mit dem Betätigungselement 52 verbunden ist. An den Verbindungsteil 58 sind an dem dem Betätigungselement 52 abgewandten Ende zwei sich zu den Führungsvorsprüngen 18 hin erstreckende Fortsätze 60 angeformt, die in einem spitzen Winkel zum Verbindungsteil 58 und von dem Betätigungselement 52 weggerichtet verlaufen. Die beiden in etwa stabförmigen Fortsätze 60 weisen abgewinkelte Enden 62 auf, die bei nicht Zugbeanspruchungen ausgesetztem Verriegelungsteil 48 miteinander fluchten. An den beiden Endabschnitten 62, die zu den Führungsvorsprüngen 18 hin weisen, ist das Verriegelungsteil 48 an Führungselementen 64 geführt, die einstückig mit der Sitzschale 12 verbunden sind und an diese zwischen den beiden Führungsvorsprüngen 18 angeformt sind.

Die Enden 62 weisen einen Abstand zu den Führungsvorsprüngen 18 auf.

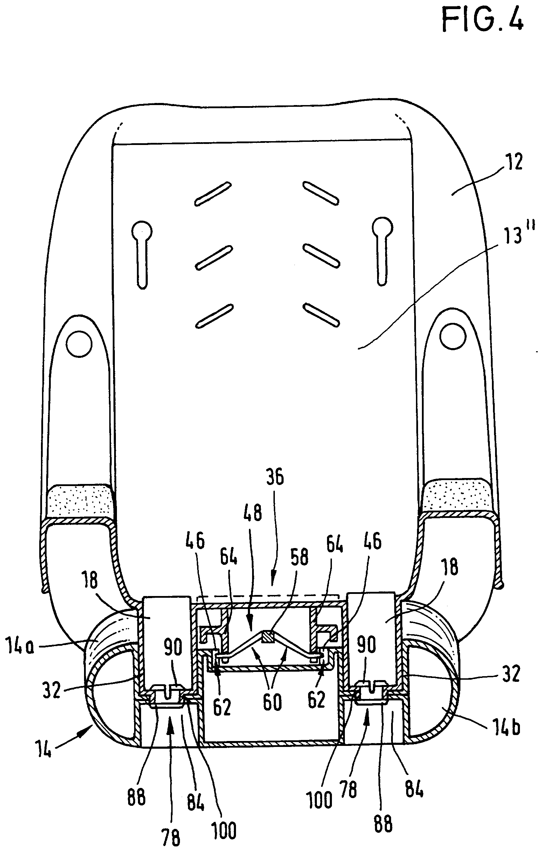

Wie anhand von Fig. 4 zu erkennen ist, können die beiden Endabschnitte 62 in zwei einander gegenüberliegende Verriegelungsvertiefungen 40 der beiden Zahnstangen 44 eintauchen, womit Sitzschale 12 und Sockel 14 miteinander verriegelt sind. Durch Verschwenken des Betätigungselementes 32 beim Bewegen desselben zum Sitzschalenrand hin wird das Verbindungsteil 48 in Richtung des Pfeils 66 der Fign. 5 und 6 bewegt. Da die beiden Endabschnitte 62 der Fortsätze 60 an den Führungselementen 64 geführt sind, bewegen sich die Endabschnitte 62 einwärts, wodurch sie aus den Verriegelungsvertiefungen 40 herausbewegt werden, wie in Fig. 6 angedeutet ist. Wie ebenfalls in Fig. 6 angedeutet, verformt sich infolge der festen Verbindung der Fortsätze 60 mit dem Verbindungsteil 58 und der Führung der Endabschnitte 62 an den Führungselementen 64 die hierbei auf Zug beanspruchten Zugabschnitte 68, über die die Endabschnitte 62 mit dem Verbindungsteil 58 verbunden sind. Da das gesamte Verriegelungsteil 48 aus federelastischem Kunststoffmaterial besteht, tendieren die Zugabschnitte 68 dazu, sich beim Lösen des Betätigungselementes 32 wieder zu strecken, was zur Folge hat, daß das Betätigungselement 32 zurückschwenkt und die Endabschnitte 32 wieder sich nach außen bewegen und sich in zwei gegenüberliegende Verriegelungsvertiefungen 40 hineinbewegen. Beim Betätigen des Betätigungselementes 32 wird also durch Verformung der Zugabschnitte 68 eine Rückstellkraft aufgebaut, infolge derer das Verriegelungsteil 48 beim Lösen des Betätigungselementes 52 wieder seine Verriegelungsposition einnimmt, in der die von den Endabschnitten 62 gebildeten Verriegelungsabschnitte der Fortsätze 60 in Verriegelungsvertiefungen 40 am Sockel 12 eintauchen. Der Vorteil dieses Verriegelungsmechanismus 36 steht in der Erzeugung einer Rückstellkraft für das Verriegelungsteil 48 durch sich bei Betätigung des Betätigungselements 52 ergebende Verformung eines elastischen Teils des Verriegelungsteils 48, nämlich des Zugabschnitts 68, der integraler Bestandteil des Verriegelungsteils 48 ist, wodurch die Teileanzahl für den Verriegelungsmechanismus 36 und damit auch die Gesamtteileanzahl des Kindersicherheitssitzes 10 reduziert ist. Sämtliche Teile des Verriegelungsmechanismus 36 (Verriegelungsteil 48 und Betätigungselement 52 sowie Führungsteile 64 und Verriegelungsvertiefungen 40) bestehen aus Kunststoff, also aus demjenigen Material, aus dem auch die Sitzschale 12 und der Sockel 14 gefertigt sind, oder aus einem damit vergleichbaren Kunststoffmaterial.

Vorteilhafterweise ist ferner die Verbindung von Verriegelungsteil 48 bzw. Verbindungsteil 58 und Betätigungselement 52 durch die bei 70 angedeutete gelenkige Rastverbindung realisiert, die aus einem federelastischen Rastvorsprung 72 an dem Betätigungselement 52 und einer Durchbrechung 74 in dem Verbindungsteil 58 besteht. In Fig. 6 sind das Verriegelungselement 48 und das Betätigungselement 52 in ihrem noch nicht verbundenen Zustand dargestellt. Bei dem Rastvorsprung 72 handelt es sich um eine geschlitzte Kugel, die über einen Hals mit dem Betätigungselement 52 verbunden ist (s. Fig. 6). Beide Teile, nämlich Betätigungselement 52 und Verriegelungsteil 48 sind ferner über die in den Fign. 2 und 6 dargestellten Filmscharniere 76 miteinander verbunden. Diese Filmscharnierverbindung entsteht bereits während der Produktion von Betätigungselement 52 und Verriegelungsteil 48, weshalb es sich bei diesen beiden Teilen strenggenommen um ein mit einem (einzigen) Werkzeug gemeinsam produziertes Gesamtteil handelt. Die Filmscharniere 76 erlauben die Zusammenfügung der beiden Teile durch die Rastverbindung 70 in lediglich einer einzigen Relativausrichtung, nämlich derjenigen, die auch zum Anbringen von Betätigungselement und Verriegelungsteil 48 an der Sitzschale 12 erforderlich ist. Würden z.B. die beiden Teile (Betätigungselement 52 und Verriegelungsteil 48) vor dem Zusammenbau (versehentlich) verdreht, so würde man sie wegen der Filmscharniere 76 nicht mehr rastend miteinander verbinden können. Bei rastender Verbindung erstreckt sich der den kugelartigen Rastvorsprung 72 haltende Hals durch die Durchbrechung 74 in dem Betätigungselement 52 zugewandten Ende des Verbindungsteils 58.

Wie anhand er Fign. 3, 4 und 9 zu erkennen ist, ist die Sitzschale 12 durch zwei Verankerungselemente 78 an dem Sockel 14 gehalten. Die beiden Verankerungselemente 78 sind in zwei Löcher 80 eingesteckt, die in den den Böden der Führungsnuten 32 zugewandten unteren Außenflächen der Führungsvorsprünge 18 ausgebildet sind (s. Fig. 5). Die beiden Verankerungselemente 78 erstrecken sich ferner durch zwei nach Art von Langlöchern ausgebildeten länglichen Aussparungen 82, die in den Böden der Führungsnuten 32 ausgebildet sind. Wie anhand der Fign. ferner zu erkennen ist, ist der Sockel zweiteilig ausgebildet und weist einen oberen Teil 14a und einen unteren Teil 14b auf. In der Unterseite des unteren Sockelteils 14b sind wie in der Sockeloberseite zwei längliche Vertiefungen 84 ausgebildet, die den Führungsnuten 32 gegenüberliegen und mit diesen fluchten. Die die Böden der Führungsnuten 32 und der Vertiefungen 84 bildenden Wandabschnitte der beiden Sockelteile liegen aneinander, wie in Fig. 4 dargestellt. In den Vertiefungen 84 sind mit den Aussparungen 82 in den Führungsnuten 32 deckungsgleiche Aussparungen 86 ausgebildet. Die Verankerungselemente erstrecken sich auch durch diese Aussparungen 86 hindurch (s. beispielsweise Fig. 3). Die Verankerungselemente 78 sind nach Art von doppelwandigen Hülsenkörpern ausgebildet, die zwei Ringflansche 78 aufweisen, von denen Ringflansch 88 den Rand der Aussparung 86 auf der der Sitzschale 12 abgewandten Seite untergreift und von denen der Ringflansch 90 den Lochrand des Loches 80 auf der dem Sockel 14 abgewandten Seite hintergreift, womit Sitzschale 12 und Sockel 14 zusammengehalten sind.

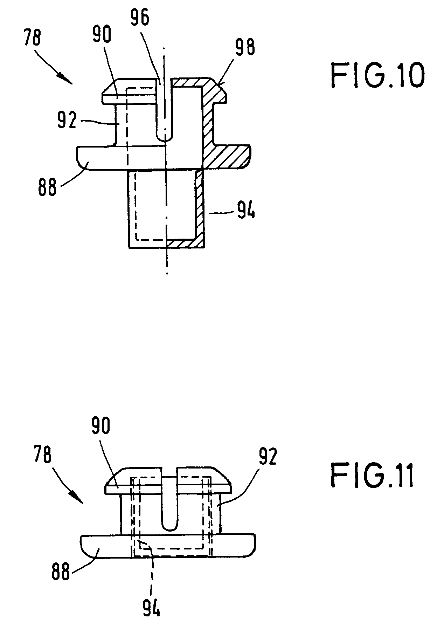

In den Fign. 10 und 11 ist ein Verankerungselement 78 in seinem Zustand nach der Herstellung und vor der Montage (Fig. 10) und in seinem Zustand nach dem Eindrücken in das zugehörige Loch 80 der Sitzschale (Fig. 11) dargestellt. Das Verankerungselement 78 besteht aus einem Außenhülsenkörper 92 und einem Innenhülsenkörper 94, die beide ineinandergeschoben werden bzw. sind. Der Innenhülsenkörper 94 ist paßgenau axial in den Außenhülsenkörper 92 einschiebbar. Der Außenhülsenkörper 92 trägt die Ringflansche 88 und 90, die einander gegenüberliegende und radial abstehende Ringflächen aufweisen, die bei eingesetztem Verankerungselement 78 an den Rändern der Aussparungen 86 und den Rändern der Löcher 80 anliegen. An seinem oberen den Ringflansch 90 tragenden Ende ist der Außenhülsenkörper 92 geschlitzt, d.h. mit axialen Schlitzen 96 versehen. Die vier sich paarweise gegenüberliegenden Schlitze 96 erstrecken sich nahezu über die gesamte axiale Länge des Außenhülsenkörpers 92. Aufgrund der geschlitzten Ausführung ist der außen aus Kunststoff bestehende Außenhülsenkörper 92 in gewisserweise federelastisch ausgebildet. Das den Ringflansch 90 tragende obere Ende ist zum Ende hin konisch zulaufend ausgestaltet. Über die dadurch entstehende Konusfläche 98 wird das geschlitzte Ende des Außenhülsenkörpers 92 beim Einstecken von unten in den Sockel 14 zusammengedrückt. Bei vollständig eingedrücktem Verankerungselement 78 spreizt sich das geschlitzte Ende des Außenhülsenkörpers 92 wieder auf und hintergreift die Kante des Loches 80 in der Sitzschale 12.

Zu Beginn des Einbaus des Verankerungselementes 78 befindet sich dessen Innenhülsenkörper 84 außerhalb des Außenhülsenkörpers 92, vielmehr sind die beiden Hülsenkörper 92,94, wie in Fig. 10 gezeigt, in axialer Verlängerung zueinander angeordnet. An ihren miteinander fluchtenden zugewandten Enden sind die beiden Hülsenkörper 92,94 über eine dünne Ringverbindung miteinander verbunden. Durch Ausübung eines Druckes auf den Ringflansch 88 wird zunächst der Außenhülsenkörper 92 in das Loch 80 der Sitzschale 12 hineingedrückt. Anschließend wird durch Ausübung einer axialen Kraft auf den Innenhülsenkörper 94 dieser in den Außen hülsenkörper 92 hineingeschoben, wobei die Ringverbindungsstelle reißt. Der an seinem dem Außenhülsenkörper 92 abgewandten Ende geschlossene Innenhülsenkörper 94 weist im wesentlichen die gleiche axiale Länge wie der Außenhülsenkörper 92 auf und verhindert ein unbeabsichtigtes Zusammendrücken oder sich Verjüngen des geschlitzten Endes des Außenhülsenkörpers 92. Produktionstechnisch sind die beiden Hülsenkörper 92,94 als ein Teil zu betrachten, da sie nach der Herstellung einstückig miteinander verbunden sind und gemeinsam in einem (einzigen) Werkzeug hergestellt werden. Das im montierten Zustand doppelwandige Verankerungselement 78 trägt zur Erhöhung der Stabilität der Verankerung bei. Wie in den Fign. dargestellt, sind die Löcher 80 in den Führungsvorsprüngen 18 der Sitzschale 12 mit einem zylindrischen Stutzen 100 versehen, dessen Höhe dem axialen Abstand der beiden einander gegenüberliegenden radialen Ringflächen der Ringflansche 88,90 gleich ist.

Die hier beschriebenen und in den Zeichnungen dargestellten Merkmale des Kindersicherheitssitzes sind auch in Kombination mit denjenigen Merkmalen bei einem Kindersicherheitssitz zu verwirklichen, die in der zeitgleichen gleichlautenden weiteren Anmeldung der Anmelderin mit dem Titel "Kindersicherheitssitz" offenbart sind.

## Patentansprüche

1. Kindersicherheitssitz mit
einem Sockel (14) und
- einer Sitzschale (12), die relativ zum Sockel (14) verschiebbar und festlegbar ist,
**dadurch gekennzeichnet,**
daß die Sitzschale (12) oder der Sockel (14) mindestens einen angeformten Führungsvorsprung (18) zum Führen der Sitzschale an dem Sockel (14) aufweist,
daß mindestens eine direkt an dem Sockel (14) oder der Sitzschale (12) ausgebildete Führungsnut (32) zur Aufnahme des Führungsvorsprungs (18) vorgesehen ist, wobei der Führungsvorsprung (18) bei sich relativ zum Sockel (14) verschiebender Sitzschale (12) in der Führungsnut (32) geführt ist, und
daß die Sitzschale (12) unmittelbar an dem Sockel (14) gehalten ist.

2. Kindersicherheitssitz nach Anspruch 1, dadurch gekennzeichnet, daß zwei Führungsvorsprünge (18) und zwei Führungsnuten (32) vorgesehen sind, die jeweils in der quer zur Verschiebungsrichtung (34) verlaufenden Richtung voneinander beabstandet sind.

3. Kindersicherheitssitz nach Anspruch 1 oder 2, dadurch gekennzeichnet, daß der mindestens eine Führungsvorsprung (18) an der dem Sockel (14) zugewandten Unterseite der Sitzschale (12) und die mindestens eine Führungsnut (32) an der der Sitzschale (12) zugewandten Oberseite des Sockels (14) angeordnet ist.

4. Kindersicherheitssitz nach einem der Ansprüche 1 bis 3, dadurch gekennzeichnet, daß der mindestens eine Führungsvorsprung (18) und die mindestens eine Führungsnut (32) jeweils bogenförmig ausgebildet ist.

5. Kindersicherheitssitz nach einem der Ansprüche 1 bis 4, dadurch gekennzeichnet, daß sich der mindestens eine Führungsvorsprung (18) in Verschiebungsrichtung (34) erstreckt und daß die mindestens eine Führungsnut (32) an ihren in Verschiebungsrichtung (34) liegenden Enden offen ist.

6. Kindersicherheitssitz nach einem der Ansprüche 1 bis 5, dadurch gekennzeichnet, daß die Sitzschale (12) oder der Sockel (14) eine sich in Verschiebungsrichtung erstreckende längliche Aussparung (82,86) aufweist, in die hinein mindestens ein an dem Sockel (14) oder der Sitzschale (12) angeordnetes Verankerungselement (78) zum Sichern der Sitzschale (12) an dem Sockel (14) hineinragt.

7. Kindersicherheitssitz nach Anspruch 6, dadurch gekennzeichnet, daß das mindestens eine Verankerungselement (78) ein Hülsenkörper (92) mit an seinen axialen Enden angeordneten Ringflanschen (88,90) zum Hintergreifen des Randes der länglichen Aussparung (82,86) und eines in der Sitzschale (12) oder dem Sockel (14) vorgesehenen Loches (80) ist.

8. Kindersicherheitssitz nach Anspruch 6 oder 7, dadurch gekennzeichnet, daß die längliche Aussparung (82,86) in mindestens einer der Führungsnuten (32) oder in dem mindestens einen Führungsvorsprung (18) und das Verankerungselement (80) an dem mindestens einen Führungsvorsprung (18) oder in der mindestens einen Führungsnut (32) angeordnet ist, und zwar der länglichen Aussparung (82,86) gegenüberliegend.

9. Kindersicherheitssitz nach Anspruch 7 oder 8, dadurch gekennzeichnet, daß der Hülsenkörper (92) zu einem axialen Ende hin offene Schlitze (96) aufweist und der Ringflansch (90) dieses axialen Endes des Hülsenkörpers (92) eine außenliegende Schrägfläche (98) aufweist.

10. Kindersicherheitssitz nach einem der Ansprüche 7 bis 9, dadurch gekennzeichnet, daß der Hülsenkörper einen Außenhülsenkörper (92) mit einem Innendurchmesser und einen Innenhülsenkörper (94) mit einem Außendurchmesser aufweist und daß der Außendurchmesser des Innenhülsenkörpers (94) gleich oder im wesentlichen gleich dem Innendurchmesser des Außenhülsenkörpers (92) ist.

11. Kindersicherheitssitz nach Anspruch 9 und 10, dadurch gekennzeichnet, daß der Außenhülsenkörper (92) mit den Schlitzen (96) versehen ist.

12. Kindersicherheitssitz nach Anspruch 9 und 10 oder 11, dadurch gekennzeichnet, daß der Außenhülsenkörper (92) die Ringflansche (88,90) an seinen axialen Enden aufweist.

13. Kindersicherheitssitz nach einem der Ansprüche 10 bis 12, dadurch gekennzeichnet, daß die beiden Hülsenkörper (92,94) vor dem Ineinanderschieben als einteiliges Element vorliegen, wobei die beiden Hülsenkörper (92,94) in axialer Richtung nebeneinanderliegend angeordnet und an ihren einander zugewandten axialen Enden verbunden sind und diese Verbindung beim Ineinanderschieben der Hülsenkörper reißt.

14. Kindersicherheitssitz, insbesondere nach einem der Ansprüche 1 bis 13, mit
- einem Sockel (14),
- einer Sitzschale (12), die relativ zum Sockel (14) verstellbar ist, und
- einer Verriegelungsvorrichtung (36) zum Festlegen der Sitzschale (12) relativ zum Sockel (14), wobei die Verriegelungsvorrichtung (36) aufweist:
- Verriegelungsvertiefungen (40),
- mindestens ein Verriegelungsteil (48), das in einer Verriegelungsposition, in welcher es sich in Eingriff mit einer Verriegelungsvertiefung (40) befindet, und in eine Freigabeposition, in welcher es sich außer Eingriff mit den Verriegelungsvertiefungen befindet, bewegbar ist, und
- ein Betätigungselement (52) zum Bewegen des mindestens einen Verriegelungsteils (48) aus der Verriegelungsposition in die Freigabeposition,
**dadurch gekennzeichnet,**
- daß die Verriegelungsvertiefungen (40) unmittelbar an dem Sockel (14) oder an der Sitzschale (12) ausgebildet sind und das Verriegelungsteil (48) unmittelbar an der Sitzschale (12) oder dem Sockel (14) angeordnet ist und
- daß das Verriegelungsteil (48) elastisch verformbar ist und sich bei Betätigung des Betätigungselements (52) zum Bewegen des Verriegelungsteils (48) in die Freigabeposition unter Erzeugung einer Rückstellkraft verformt, wobei sich das Verriegelungsteil (48) beim Lösen des Betätigungselements (52) aufgrund der Rückstellkraft selbständig in die Verriegelungsposition bewegt.

15. Kindersicherheitssitz nach Anspruch 14, dadurch gekennzeichnet, daß das mindestens eine Verriegelungsteil (48) zum Bewegen zwischen der Verriegelungsposition und der Freigabeposition an der Sitzschale (12) oder dem Sockel (14) geführt ist.

16. Kindersicherheitssitz nach Anspruch 14 oder 15, dadurch gekennzeichnet, daß das Verriegelungsteil (48) einen an der Sitzschale (12) oder dem Sockel (14) geführten Verriegelungsabschnitt (62) und einen zum Verriegelungsabschnitt (62) und der Führungsrichtung winklig verlaufenden Zugabschnitt (68) aufweist, und daß der Zugabschnitt (68) bei Betätigung des Betätigungselements (52) zum Bewegen des Verriegelungsteils (48) aus der Verriegelungsposition in die Freigabeposition Zugbeanspruchungen ausgesetzt ist und sich unter Erzeugung der Rückstellkraft verformt und dabei den Verriegelungsabschnitt (62) in dessen Führung (Führungselemente 64) aus einer Verriegelungsvertiefung (40) heraus bewegt und daß sich der Zugabschnitt (68) beim Lösen des Betätigungselements (52) infolge der Rückstellkraft zu seiner ursprünglichen Form zurückstellt und dabei den Verriegelungsabschnitt (62) in dessen Führung (Führungselemente 64) in eine Verriegelungsvertiefung (40) hinein bewegt.

17. Kindersicherheitssitz nach einem der Ansprüche 14 bis 16, dadurch gekennzeichnet, daß zwei einander abweisende Verriegelungsabschnitte (62) vorgesehen sind, die in einander gegenüberliegende Verriegelungsvertiefungen (40) hinein und aus diesen heraus bewegbar sind.

18. Kindersicherheitssitz nach einem der Ansprüche 14 bis 17, dadurch gekennzeichnet, daß das mindestens eine Verriegelungsteil (48) über ein Verbindungsteil (58) gelenkig mit dem Betätigungselement (52) verbunden ist und daß das Betätigungselement (52) ein schwenkbar an der Sitzschale (12) oder dem Sockel (14) gelagerter Bügel ist.

19. Kindersicherheitssitz nach Anspruch 18, dadurch gekennzeichnet, daß das Betätigungselement (52), das Verbindungsteil (58) und das mindestens eine Verriegelungsteil (48) aus Kunststoff bestehen, wobei das Verbindungsteil (58) einstückig mit dem mindestens einen Verriegelungsteil (48) ist und das Verbindungsteil (58) und das Betätigungselement (52) nach der Herstellung über Filmscharniere (76) miteinander verbunden sind, und daß das Verbindungsteil (58) und das Betätigungselement (52) unter Aufrechterhaltung der Filmscharniere (76) miteinander mechanisch koppelbar sind.

20. Kindersicherheitssitz nach Anspruch 19, dadurch gekennzeichnet, daß das Betätigungselement (52) und das Verbindungsteil (58) durch eine Rastverbindung (70) gelenkig miteinander verbindbar sind.

21. Kindersicherheitssitz nach Anspruch 20, dadurch gekennzeichnet, daß das Betätigungselement (52) oder das Verbindungsteil (58) eine Durchbrechung (74) aufweist, in die hinein ein Rastzapfen (78) an dem Verbindungsteil (58) oder dem Betätigungselement (52) hineindrückbar ist.

22. Kindersicherheitssitz nach einem der Ansprüche 14 bis 21, dadurch gekennzeichnet, daß die Rastvertiefungen (40) nach Art mindestens einer sich in Verstellrichtung der Sitzschale (12) relativ zum Sockel (14) erstreckenden einstückig an dem Sockel (14) oder der Sitzschale (12) angeformten Zahnstange (44) ausgebildet sind.
